# EUROPEAN PATENT APPLICATION

(11) **EP 1 302 311 A1**
(43) Date of publication of application: **16.04.2003**
(21) Application number: 01947828.8
(22) Date of filing: 04.07.2001
(51) Int. Cl.: B32B 27/32, B65D 65/40

(54) **CONTAINER**

(30) Priority: 04.07.2000 JP 2000202140
(71) Applicant: NIHON TETRA PAK K.K., Tokyo 102-0094 (JP); NIPPON ZEON CO., LTD., Chiyoda-ku Tokyo 100-8323 (JP)
(72) Inventor: FRISK, Peter, Chiyoda-ku Tokyo 102-0094 (JP); OGITA, Hiroaki, Chiyoda-ku Tokyo 102-0094 (JP); KOBAYASHI, Norio, Chiyoda-ku Tokyo 102-0094 (JP); KAWADA, Keiichi Nippon Zeon Co., Ltd., Kawasaki-shi Kanagawa 210-9507 (JP); NARUSE, Fumihiro Nippon Zeon Co., Ltd., Kawasaki-shi Kanagawa 210-9507 (JP)
(74) Representative: VOSSIUS & PARTNER
(86) International application number: JP0105818
(87) International publication number: WO02002324

(57) **Abstract**

A container comprised of a plastic-paper laminate obtained by laminating a layer comprised of a plastic composition containing 100 parts by weight of a linear low density polyolefin and 10 to 20 parts by weight of a norbornene-based polymer on at least one surface of a paper base is provided. This container is superior in heat resistance, heat sealability, and low moisture permeability making it suitable for packaging food and beverages.

## Description

### TECHNICAL FIELD OF THE INVENTION

The present invention relates to a container, comprised of a plastic-paper laminate obtained by laminating a paper base with a plastic layer, able to be used as a container for milk, soft drinks, tea, alcoholic beverages, etc.

### BACKGROUND ART

Milk, soft drinks, and other beverages are generally filled, sold, and used in paper containers along with glass or plastic bottles or cans. Such paper containers are produced by folding paper laminated on one or both surfaces with a polyethylene, polypropylene, or other olefin-based plastic film so as to form a container of a rectangular box or tetrahedron or other desired shape and heat sealing it utilizing the heat sealability of the olefin-based plastic.

In recent years, such paper containers have been used for milk, soft drinks, juice, tea, alcoholic beverages, fast foods, and many other foods and beverages at a faster rate of growth compared with glass or plastic bottles or cans from the viewpoint of protection of the environment and have enjoyed dramatically demand growth. Therefore, improvement in the productivity in production of food and beverage packages using paper containers has been sought as being economically important.

To improve the productivity in the production of food and beverage packages using paper containers, reduction of the time for the heat sealing process is most effective. Even if trying to raise the sealing temperature so as to seal the containers in a short time, however, there are limits to the heat resistance of the olefin-based plastic film coated and the phenomenon of foaming occurs at the time of melting, so the time for an effective heat sealing process has not been shortened.

On the other hand, norbornene-based polymers and other cyclic olefin-based plastics are superior to conventional linear olefin plastics in transparency, heat resistance, low moisture permeability, etc., so their use has been proposed for plastic containers or plastic films etc. and for containers made of paper laminated with plastic films (Japanese Unexamined Patent Publication (Kokai) No. 8-72888 and Japanese Unexamined Patent Publication (Kokai) No. 10-310121).

However, cyclic olefin-based plastic films are insufficient in heat sealability, so use for paper containers such as milk packs has been difficult.

### DISCLOSURE OF INVENTION

An object of the present invention is to provide a container superior in heat resistance, heat sealability, and low moisture permeability.

The inventors engaged in intensive research to achieve this object and as a result discovered that a container made of a laminate obtained by laminating a plastic layer comprised of a polyethylene or other linear polyolefin plastic conventionally used for coating paper containers plus a specific amount of a norbornene-based polymer on at least one surface of paper is superior in low moisture permeability, heat resistance, and heat sealability and thereby perfected the present invention. That is, the present invention was made based on the discovery that combination of a linear low density polyolefin and a norbornene-based polymer in a specific weight ratio enables the advantages of the two plastics to be actively utilized for the first time.

Therefore, according to the present invention, there is provided a container comprised of a plastic-paper laminate obtained by laminating a layer comprised of a plastic composition containing 100 parts by weight of a linear low density polyolefin and 10 to 20 parts by weight of a norbornene-based polymer on at least one surface of a paper base.

Preferably, said norbornene-based polymer contains at least 40 wt% of dicyclopentadiene-derived repeated structural units in the overall repeating units of the polymer.

Preferably, the thickness of the layer comprised of said plastic composition is 5 to 40 µm.

Preferably, the thickness of the paper base is 80 to 800 µm.

Preferably, said linear low density polyolefin is polyethylene or polypropylene.

Preferably, the ratio of thickness of the layer comprised of said plastic composition and the paper base is 1/2 to 1/12.

According to the present invention, there is provided a paper container superior in heat resistance, heat sealability, and low moisture permeability suitable for packaging food and beverages.

### BEST MODE FOR CARRYING OUT THE INVENTION

Below, embodiments of the present invention will be explained. These embodiments are described for facilitating understanding of the present invention and are not described for limiting the present invention.

The container of the present invention is formed from a plastic-paper laminate obtained by laminating a plastic layer comprised of a specific plastic composition on at least one surface of a paper base. This plastic composition contains a linear low density polyolefin and a norbornene-based polymer in a specific ratio.

### (Linear Low Density Polyolefin)

The linear low density polyolefin able to be used in the present invention is produced from mainly ethylene or propylene copolymerized, if necessary, with 1-butene, 1-pentene, 4-methyl-1-pentene, 1-decene, or another C₄ to C₁₀ α-olefin in several wt%. The polymerization reaction is performed using mainly solution polymerization or gas phase polymerization under several tens of atmospheres (medium pressure method) by co-ordination anionic copolymerization using a transition metal catalyst, but bulk polymerization at over 1000 atm (high pressure method) may also be used. The specific gravity is usually 0.918 to 0.940, preferably 0.920 to 0.930, while the melt flow rate (190°C, 2 kg/cm²) is usually 1 to 30 g/10 min, preferably 3 to 15 g/10 min, more preferably 5 to 9 g/10 min.

In the present invention, the linear low density polyolefin is used as a material having the action of imparting flexibility and heat sealability to the layer comprised of the plastic composition while not reducing the mechanical strength and of maintaining good heat sealability due to heating.

### (Norbornene-Based Polymer)

The norbornene-based polymer able to be used in the present invention has repeated structural units of a monomer having a norbornene ring structure. The ratio of the repeating units is suitably selected in accordance with the purpose of use, but normally is at least 50 wt%, preferably at least 70 wt%, more preferably at least 90 wt%. If the ratio of the repeated structural units of a monomer having a norbornene ring structure is in this range, the heat resistance and low moisture permeability of the layer comprised of the plastic composition are improved. Here, the "heat resistance" is the property of the plastic layer melting without occurrence of the phenomenon of bubbling even when heated to a high temperature in the process of heat sealing plastic layers together when forming a container using a plastic-paper laminate. If the heat resistance is superior, it is possible to raise the heat sealing temperature to improve the productivity. If bubbling occurs, the bond strength of the sealed surfaces drops remarkably, so a material with a good heat resistance is sought.

As specific examples of the norbornene-based polymer, for example the known polymers disclosed in Japanese Unexamined Patent Publication (Kokai) No. 3-14882, Japanese Unexamined Patent Publication (Kokai) No. 3-122137, etc. may be mentioned. Ring-opening polymers of norbornene-based monomers and their hydrides, addition polymers of norbornene-based monomers, and addition copolymers of norbornene-based monomers and monomers for which addition copolymerization with the same is possible may be mentioned.

The above "norbornene-based monomer" is a monomer containing norbornene ring structures and includes norbornene-based monomers without norbornane rings attached and norbornene-based monomers with norbornane rings attached. As specific examples, bicyclo[2,2,1]-hept-2-ene (common name: norbornene), 5-methyl-bicyclo[2,2,1]-hept-2-ene, 5,5-dimethyl-bicyclo[2,2,1]-hept-2-ene, 5-ethyl-bicyclo[2,2,1]-hept-2-ene, 5-butyl-bicyclo[2,2,1]-hept-2-ene, 5-hexyl-bicyclo[2,2,1]-hept-2-ene, 5-octyl-bicyclo[2,2,1]-hept-2-ene, 5-octadecyl-bicyclo[2,2,1]-hept-2-ene, 5-ethylidene-bicyclo[2,2,1]-hept-2-ene, 5-methylidene-bicyclo[2,2,1]-hept-2-ene, 5-vinyl-bicyclo[2,2,1]-hept-2-ene, 5-propenyl-bicyclo[2,2,1]-hept-2-ene;
5-methoxycarbonyl-bicyclo[2,2,1]-hept-2-ene, 5-cyano-bicyclo[2,2,1]-hept-2-ene, 5-methyl-5-methoxycarbonyl-bicyclo[2,2,1]-hept-2-ene, 5-ethoxycarbonyl-bicyclo[2,2,1]-hept-2-ene, 5-methyl-5-ethoxycarbonyl-bicyclo[2,2,1]-hept-2-ene, bicyclo[2,2,1]-hept-5-enyl-2-methylpropionate, bicyclo[2,2,1]-hept-5-enyl-2-methyloctanate, bicyclo[2,2,1]-hept-2-en-5,6-dicarboxylate anhydride, 5-hydroxymethyl-bicyclo[2,2,1]-hept-2-ene, 5,6-di(hydroxymethyl)-bicyclo[2,2,1]-kept-2-ene, 5-hydroxy-i-propyl-bicyclo[2,2,1]-hept-2-ene, 5,6-dicarboxy-bicyclo[2,2,1]-hept-2-ene, bicyclo[2,2,1]-hept-2-en-5,6-dicarboxylate imide, 5-cyclopentyl-bicyclo[2,2,1]-hept-2-ene, 5-cyclohexyl-bicyclo[2,2,1]-hept-2-ene, 5-cyclohexenyl-bicyclo[2,2,1]-hept-2-ene, 5-phenyl-bicyclo[2,2,1]-hept-2-ene;
tricyclo[4,3,1^{2,5},0^{1,6}]-deca-3,7-diene (common name "dicyclopentadiene") , tricyclo[4,3,1^{2,5},0^{1,6}]-deca-3-ene, tricyclo[4,4,1^{2,5},0^{1,6}]-undeca-3,7-diene, or tricyclo[4,4,1^{2,5},0^{1,6}]-undeca-3,8-diene, tricyclo[4,4,1^{2,5},0^{1,6}]-undeca-3-ene, tetracyclo[7,4,1^{10,13},0^{1,9},0^{2,7}]-trideca-2,4,6,11-tetraene (also called "1,4-methano-1,4,4a,9a-tetrahydrofluorene"), tetracyclo[8,4,1^{11,14},0^{1,10},0^{3,8}]-trideca-3,5,7,12-tetraen e (also called "1,4-methano-1,4,4a,5,10,10a-hexahydroanthracene"), and other norbornene-based monomers with no norbornane rings attached;
tetracyclo[4,4,1^{2,5},1^{7,10},0]-dodeca-3-ene (also simply called "tetracyclododecene"), 8-methyl-tetracyclo[4,4,1^{2,5},1^{7,10},0]-dodeca-3-ene, 8-ethyl-tetracyclo[4,4,1^{2,5},1^{7,10},0]-dodeca-3-ene, 8-methylidene-tetracyclo [4,4,1^{2,5},1^{7,10},0]-dodeca-3-ene, 8-ethylidene-tetracyclo[4,4,1^{2,5},1^{7,10},0]-dodeca-3-ene, 8-vinyl-tetracyclo[4,4,1^{2,5},1^{7,10},0]-dodeca-3-ene, 8-propenyl-tetracyclo[4,4,1^{2,5},1^{7,10},0] -dodeca-3-ene, 8-methoxycarbonyl-tetracyclo[4,4,1^{2,5},1^{7,10},0]-dodeca-3-e ne, 8-methyl-8-methoxycarbonyl-tetracyclo[4,4,1^{2,5},1^{7,10},0]-d odeca-3-ene, 8-hydroxymethyl-tetracyclo[4,4,1^{2,5},1^{7,10},0]-dodeca-3-ene, 8-carboxy-tetracyclo[4,4,1^{2,5},1^{7,10},0]-dodeca-3-ene, 8-cyclopentyl-tetracyclo[4,4,1^{2,5},1^{7,10},0]-dodeca-3-ene, 8-cyclohexyl-tetracyclo[4,4,1^{2,5},1^{7,10},0]-dodeca-3-ene, 8-cyclohexenyl-tetracyclo[4,4,1^{2,5},1^{7,10},0]-dodeca-3-ene, 8-phenyl-tetracyclo[4,4,1^{2,5},1^{7,10},0]-dodeca-3-ene, pentacyclo[6,5,1^{1,8},1^{3,6},0^{2,7},0^{9,13}]-pentadeca-3,10-diene, pentacyclo[7,4,1^{3,6},1^{10,13},0^{1,9},0^{2,7}]-pentadeca-4,11-diene, and other norbornane-based monomers with norbornane rings attached, etc. may be mentioned.

The above norbornene-based monomers may be used alone or in combinations of two or more types.

Further, as specific examples of monomers able to be used for addition copolymerization with the above norbornene-based monomers, ethylene, propylene, 1-butene, 1-pentane, 1-hexene, 3-methyl-1-butene, 3-methyl-1-pentene, 3-ethyl-1-pentene, 4-methyl-1-pentene, 4-methyl-1-hexene, 4,4-dimethyl-1-hexene, 4,4-dimethyl-1-pentane, 4-ethyl-1-hexene, 3-ethyl-1-hexene, 1-octene, 1-decene, 1-dodecene, 1-tetradecene, 1-hexadecene, 1-octadecene, 1-eicocene, and other C₂ to C₂₀ α-olefins; cyclobutene, cyclopentene, cyclohexene, 3,4-dimethylcyclopentene, 3-methylcyclohexene, 2- (2-methylbutyl)-1-cyclohexene, cyclooctene, 3a,5,6,7a-tetrahydro-4,7-methano-lH-indene, and other cycloolefins; 1,4-hexadiene, 4-methyl-1,4-hexadiene, 5-methyl-1,4-hexadiene, 1,7-octadiene, and other unconjugated dienes, etc. may be mentioned. These copolymerizable monomers may be used alone or in combinations of two or more types.

Further, the norbornene-based polymer used in the present invention preferably contains at least a predetermined amount of repeated structural units derived from norbornene, cyclopentadiene, and other norbornene-based monomers with no norbornane rings attached as the norbornene-based monomer among the repeated structural units so as to obtain more superior heat resistance, low moisture permeability, etc. Among these, it preferably contains dicyclopentadiene-derived repeated structural units in an amount of at least 40 wt% of the norbornene-based polymer structural units, more preferably at least 50 wt%, most preferably at least 60 wt%.

To obtain a ring-opening polymer using the above norbornene-based monomer, as the ring-opening polymerization catalyst, a catalyst comprised of a halide, nitrate, or acetylacetone compound of a metal such as ruthenium, rhodium, palladium, osmium, iridium, and platinum and a reducing agent or a catalyst comprised of a halide or acetylacetone compound of a metal such as titanium, vanadium, zirconium, tungsten, and molybdenum and an organoaluminum compound is used in a solvent or not in a solvent to cause ring-opening polymerization normally at a polymerization temperature of -50°C to 100°C and a polymerization pressure of 0 to 5 MPa.

Further, to obtain a hydride of one of these ring-opening (co)polymers, the ring-opening (co)polymer is hydrided by an ordinary method using hydrogen in the presence of nickel, palladium, platinum, or another hydrogenation catalyst.

An addition copolymer of norbornene-based monomers and addition copolymer of a norbornene-based monomer and an above copolymerizable monomer can for example be obtained by the method of for example copolymerizing the monomer ingredients in a solvent or not in a solvent in the presence of a catalyst comprised of a titanium, zirconium, or vanadium compound and an organoaluminum compound normally at a polymerization temperature of -50°C to 100°C and a polymerization pressure of 0 to 5 MPa.

The average molecular weight of the norbornene-based polymer used in the present invention is suitably selected in accordance with the purpose of use, but in terms of weight average molecular weight (Mw) converted to polyisoprene as measured by gel permeation chromatography (GPC) in a cyclohexane solution (when the polymer resin will not dissolve, a toluene solution) is normally 5,000 to 500,000, preferably 8,000 to 200,000, more preferably 10,000 to 100,000. If the Mw is in this range, the shaped article becomes superior in heat resistance and low moisture permeability.

The glass transition temperature (Tg) of the norbornene-based polymer used in the present invention may be suitably selected in accordance with the purpose of use, but normally is 50 to 300°C, preferably 60 to 200°C, more preferably 70 to 150°C. If the Tg is too low, the heat resistance may fall, while conversely if the Tg is too high, the temperature for producing and processing the container will have to be higher and the plastic is liable to decompose.

### (Plastic Composition)

The plastic composition according to the present invention includes 10 to 20 parts by weight of a norbornene-based polymer, preferably 12 to 18 parts by weight, per 100 parts by weight of the linear low density polyolefin as an essential ingredient. If the ratio of the two plastics is in the above range, the heat resistance, heat sealability, and low moisture permeability of the plastic film will be balanced and excellent making use of the advantages of the two plastics. If outside of the above range, the disadvantages of the plastics will appear. If necessary, an antioxidant, UV light absorber, photostabilizer, anti-static agent, lubricant, or other agent may be added to prepare the plastic composition. Further, it is also possible to add to the plastic composition a polyester plastic, urethane plastic, styrene-butadiene rubber, or another polymer to an extent not detracting from the object of the present invention.

The thickness of the layer comprised of the plastic composition is normally 5 to 40 µm, preferably 7 to 35 µm, more preferably 10 to 30 µm. If the plastic layer is too thin, areas are liable to be left uncoated or pinholes are liable to occur. Conversely, if too thick, there is a possibility of the productivity in the heat sealing process in the production of a container deteriorating.

### (Paper Base)

The paper base able to be used in the present invention is mainly comprised of pulp paper, kraft paper, or other paper which, in accordance with need, has an aluminum foil or polyester film on which silica is deposited or other layer not passing gas (gas barrier layer) laminated on at least one surface of the paper. This gas barrier layer is preferably formed on the surface contacting the contents at the inside of the container, but in applications where the container as a whole is cooled in water, is preferably also formed on the surface forming the outside of the container. The thickness of the paper base is normally 80 to 800 µm, preferably 100 to 500 µm. Further, the thickness of the barrier layer when there is such a barrier layer is normally 5 to 20 µm, preferably 10 to 15 µm. If the paper base is too thin, the heat resistance is liable to fall, while conversely if too thick, the heat sealability is liable to be impaired.

Further, when forming a barrier layer on the paper, it is also possible to interpose a polyethylene or other plastic layer of a thickness of 5 to 10 µm as an intermediate layer for the purpose of improving the bondability between the paper and barrier layer.

### (Plastic-Paper Laminate)

In the present invention, formation of the container requires a plastic-paper laminate obtained by laminating a layer comprised of a plastic composition containing a linear low density polyolefin and norbornene-based polymer on at least one surface of a paper base. For this purpose, said plastic composition is normally pelletized, then melted and extruded using an extruder and laminated as a plastic layer on one surface of the paper base by a cast roll. Alternatively, said plastic composition is dissolved in a solvent to prepare a coating which is then coated on the paper base and dried to form the laminate. Further, it is also possible to separately produce for example a film-like plastic layer from said plastic composition and then bond it to a base to form the plastic-paper laminate. If desired, it is also possible to laminate one surface with a plastic layer, turn the base around, and then laminate the other surface with a plastic layer.

In this way, a plastic-paper laminate having a plastic layer laminated on one or both surfaces is formed. The thicknesses of the plastic layer and paper base are as described above, but the ratio of the thicknesses of the two layers is preferably a plastic layer/paper base ratio in the range of 1/2 to 1/12, more preferably a range of 1/4 to 1/7. If the value of this ratio is too small, the heat resistance is liable to drop, while conversely if too great, the heat sealability may be impaired.

### (Container)

The container of the present invention is formed from the above plastic-paper laminate into a rectangular box, tetrahedron, or other desired polyhedron shape. For this, first, creases are made in the plastic-paper laminate, then the plastic-paper laminate is folded along the creases to form the basic shape container. Next, preferably after a sterilization process, the basic shape container is subjected to predetermined processing to shape it, whereby packaging of the final shape filled with the food or beverage is formed. As the predetermined processing, there is the heat sealing of the plastic layers of the folded plastic-paper laminate. Normally, a processing method is adopted in which the basic shape container is heat sealed and filled simultaneously.

The container of the preent invention has an excellent heat resistance and has an excellent heat sealability, so the heat sealing conditions can for example be set to a temperature 40 to 60°C higher than the past, that is, 200 to 260°C, and the time shortened by 300 to 500 msec from the past, that is, to 70 to 200 msec. Even with such high temperature, short time processing, the plastic layers of the sealing surfaces will be resistant to bubbling and the bondability between the plastic layers will be good. Therefore, the productivity in the production of the container can be greatly improved. Further, the container of the present invention is not easily permeated, so the contents will not spoil even if storing a food or beverage for a long period of time.

As applications for the container of the present invention, applications for packaging and transporting milk, soft drinks, juice, green tea, coffee, black tea, alcoholic beverages, and other liquid beverages and soups and other fast foods and other foods and beverages are optimal.

### EXAMPLES

Next, the present invention will be explained more specifically by giving production examples, examples, and comparative examples, but the present invention is not limited in scope to these examples.

In these examples, "parts" are based on weight unless otherwise indicated. Further, the methods for measurement of the various physical properties were as follows:

### (1) Glass Transition Temperature (Tg)

Measured by differential scan calorimetry (DSC). Unit: °C

### (2) Weight Average Molecular Weight (Mw)

Unless otherwise indicated, measured as a value converted to polyisoprene as measured by gel permeation chromatography using cyclohexane as a solvent.

### (3) Copolymer Composition

Copolymer composition found from results of analysis by proton NMR spectrometry.

### (4) Thickness of Plastic Layer

Measured by film thickness meter (Digital Linear Gauge Model PDN12 made by Ozuaki Mfg.) Unit: µm

### (5) Heat Resistance

Observation of presence of peeling of plastic layer or bubbling under optical microscope (50X) when cutting plastic-paper laminate to sizes of 30 mm x 30 mm, placing a resultant test piece on an aluminum plate with its kraft paper side down, allowing it to stand in a 110°C gear oven for 65 seconds, then taking it out. The temperature of the gear oven is changed to 120°C, 130°C, and 140°C and the same procedure performed as above for observation of other test pieces. 60 mm x 80 mm micrographs are evaluated by the following criteria:
VG (Very Good) : No bubbles seen at all, G (Good): Less than five bubbles, F (Fair): Five to less than 10 bubbles, P (Poor): 10 or more bubbles

### (6) Heat Sealability

State of bonding as investigated when cutting plastic-paper laminate to sizes of 30 mm x 30 mm, superposing two such test pieces at plastic surfaces over area of 50 mm x 20 mm, and press bonding them by two heated stainless steel plates at a pressure of 2 MPa for 10 seconds. Same procedure performed while changing the temperature of the heated plates 2°C at a time. Minimum temperature for complete bonding is evaluated by the following criteria.
VG (Very Good) : Minimum 100°C for bonding, G (Good): Minimum 102°C for bonding, F (Fair) : Minimum 104°C for bonding, P (Poor): Minimum 106°C for bonding

### (7) Moisture Permeability

Moisture permeability measured as moisture permeation degree (g/m²·24 hr) based on JIS Z 0208 (Cup Method) under humidity of 25°C, relative humidity of 90%, and permeation area of 28.3 cm². Measured twice while changing range measured and average calculated.

### (Production Example 1 of Norbornene-Based Polymer)

500 parts of dehydrated cyclohexane was placed in a reactor at ordinary temperature under a nitrogen atmosphere. 0.55 part of 1-hexene, 0.11 part of dibutylether, and 0.22 part of triisobutylammonium were further inserted and mixed, then, while keeping the temperature at 45°C, 160 parts of tricyclo[4,3,0^{1,6},1^{2,5}]-deca-3-ene (hereinafter referred to as "DCP"), 40 parts of bicyclo[2,2,1]-hept-2-ene (hereinafter referred to as "NB"), and 30 parts of a 0.7% toluene solution of tungsten hexachloride were continuously added over 2 hours for polymerization.

The obtained polymerization reaction solution was transferred to a pressure resistant hydrogenation reactor, 10 parts of a diatomaceous earth-carried nickel catalyst (G-96D made by Nissan-Girdler Catalyst Co., Ltd., nickel carrying rate of 58 wt%) and 200 parts of cyclohexane were added, then a reaction caused at 150°C under a hydrogen pressure of 4.4 MPa for 8 hours. Diatomaceous earth was spread as a filter aid over a stainless steel mesh of a filtration device provided with such a mesh and the hydrogenation reaction solution was filtered to remove the catalyst. The filtered reaction solution was poured into 3000 parts of isopropyl alcohol while stirring to cause the hydride to precipitate, then this was filtered to recover the DCP-NB ring-opening polymer hydride. The polymer hydride was washed by 500 parts of acetone, then dried for 48 hours in a vacuum drier set to less than 133 Pa of pressure and 100 C to obtain 190 parts of the DCP-NB ring-opening polymer hydride. The main chain hydrogenation rate of the obtained ring-opening polymer hydride was 99.9%, the Mw was 43,000, the copolymer composition (weight ratio) was DCP/NB = 80/20, and the Tg was 70°C.

0.2 part of Irganox 1010 made by Ciba-Geigy (pentaerythritol tetrakis[3-(3,5-di-tert-butyl-4-hydroxyphenyl)propiona te]) was added as an antioxidant to 100 parts of the obtained DCP-NB ring-opening polymer hydride. The mixture was kneaded and extruded to form pellets by a twin-screw extruder (TEM-35B made by Toshiba Machine Co., Ltd., screw diameter 37 mm, L/D = 32, screw speed 250 rpm, plastic temperature 240°C, feed rate 10 kg/hr).

### (Production Example 2 of Norbornene-Based Polymer)

The same procedure was followed as in Norbornene-Based Polymer Production Example 1 for polymerization and hydrogenation, except for changing the 160 parts of DCP and 40 parts of NB to 170 parts of DCP and 30 parts of
8-ethyl-tetracyclo[4,4,1^{2,5},1^{7,10},0]-dodeca-3-ene (hereinafter referred to as "ETCD"), to thereby obtain 190 parts of a DCP-ETCD ring-opening polymer hydride (polymer B). The main chain hydrogenation rate of the obtained ring-opening polymer hydride was 99.9%, the Mw was 41,000, the copolymer composition (weight ratio) was DCP/ETCD = 85/15, and the Tg was 102°C.

The obtained DCP-ETCD ring-opening polymer hydride was used to prepare pellets in the same way as in Norbornene-Based Polymer Production Example 1.

### (Production Example 3 of Norbornene-Based Polymer)

The same procedure was followed as in Norbornene-Based Polymer Production Example 1 for polymerization and hydrogenation, except for changing the 160 parts of DCP and 40 parts of NB to 76 parts of DCP, 70 parts of tetracyclo[4,4,1^{2,5},1^{7,10},0]-dodeca-3-ene (hereinafter referred to as "TCD"), and 54 parts of tetracyclo[7,4,1^{10,13},0^{1,9},0^{2,7}]-dodeca-2,4,6-11-tetraene (hereinafter referred to as "MTF"), to thereby obtain 190 parts of a DCP-TCD-MTF ring-opening polymer hydride (polymer C). The main chain hydrogenation rate of the obtained ring-opening polymer hydride was 99.9%, the Mw was 38,000, the copolymer composition (weight ratio) was DCP/TCD/MTF = 38/35/27, and the Tg was 140°C.

The obtained DCP-TCD-MTF ring-opening polymer hydride was used to prepare pellets in the same way as in Norbornene-Based Polymer Production Example 1.

### Example 1

### Production of Plastic Composition

15 parts of pellets of the polymer A obtained in Production Example 1 and 85 parts of pellets of linear low density polyethylene plastic [tradename: UJ960, made by Mitsubishi Chemical Corporation, specific gravity 0.935, MFR 5.0 g/10 min] were kneaded in the above twin-screw extruder at a screw speed of 200 rpm, a plastic temperature of 210°C, and a feed rate of 20 kg/hr to produce plastic composition pellets.

### Production of Plastic-Paper Laminate

The obtained plastic composition pellets were charged into a film-making machine [extruder cylinder diameter 65 mm, L/D ratio 25, die (bottom ejection, width 850 mm), lip 0.5 mm, cast roll diameter 450 mm]. This was set to a takeup speed so as to give a predetermined film thickness at a cylinder temperature of 260°C and a cast roll temperature of 60°C. Kraft paper having a thickness of 100 µm was fed to the cast roll to produce the plastic-paper laminate.

The obtained plastic-paper laminate was evaluated for heat resistance, heat sealability, and low moisture permeability by the above test methods. The results are carried in Table 1.

### Examples 2 to 7 and Comparative Examples 1 and 2

The same procedure was followed as in Example 1 to produce and evaluate plastic composition pellets and plastic-paper laminates except for making the types and amounts of the norbornene-based polymer and the linear low density polyethylene those shown in Table 1. The results are carried in Table 1.

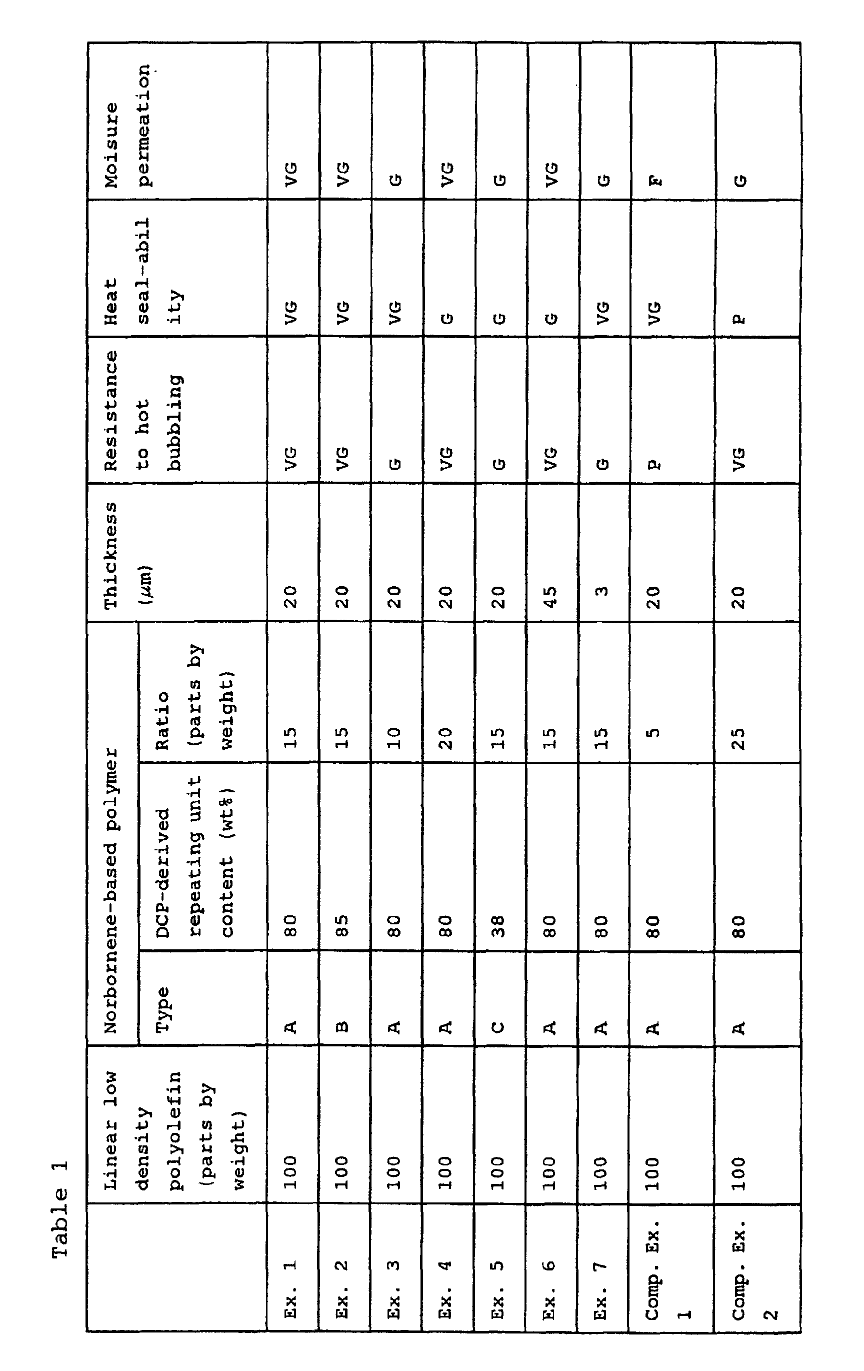

From Table 1, in each of Examples 1 to 7 comprising containers of the present invention, a paper container superior in heat resistance, heat sealability, and low moisture permeability was obtained. In Example 5 using the polymer C having under 40 wt% of DCP-derived repeated structural units in the norbornene-based polymer, the heat resistance, heat sealability, and moisture permeability ended up being evaluated somewhat low among the examples. Further, in Example 7 having a thickness of the plastic layer of an extremely thin 3 µm, the heat resistance and moisture permeability ended up being evaluated somewhat low among the examples.

On the other hand, Comparative Example 1 having a ratio of the norbornene-based polymer smaller than prescribed was poor in heat resistance and somewhat poor in moisture permeability. Further, in Comparative Example 2 having a ratio of the norbornene-based polymer greater than prescribed, the heat sealability was poor.

## Claims

1. A container comprised of a plastic-paper laminate obtained by laminating a layer comprised of a plastic composition containing 100 parts by weight of a linear low density polyolefin and 10 parts to 20 parts by weight of a norbornene-based polymer on at least one surface of a paper base.

2. The container as set forth in claim 1, wherein said norbornene-based polymer contains at least 40 wt% of dicyclopentadiene-derived repeated structural units in the overall repeating units of the polymer.

3. The container as set forth in claim 1 or 2, wherein the thickness of the layer comprised of said plastic composition is 5 µm to 40 µm.

4. The container as set forth in claim 1 or 2, wherein said linear low density polyolefin is polyethylene or polypropylene.

5. The container as set forth in claim 1 or 2, wherein the ratio of thickness of the layer comprised of said plastic composition and the paper base is 1/2 to 1/12.
